(19) Europäisches Patentamt / European Patent Office / Office européen des brevets

(11) **EP 3 670 436 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **19212898.1**

(22) Anmeldetag: **02.12.2019**

(51) Internationale Patentklassifikation (IPC):
**B67D 1/12** *(2006.01)*      **A47J 31/44** *(2006.01)*
**A47J 31/52** *(2006.01)*

(52) Gemeinsame Patentklassifikation (CPC):
**A47J 31/4482; A47J 31/52**

(54) **GETRÄNKEAUTOMAT UND STEUERVERFAHREN**

BEVERAGE DISPENSER AND CONTROL METHOD

DISTRIBUTEUR AUTOMATIQUE DE BOISSONS ET PROCÉDÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018   DE 102018222080**

(43) Veröffentlichungstag der Anmeldung:
**24.06.2020   Patentblatt 2020/26**

(73) Patentinhaber: **BSH Hausgeräte GmbH**
**81739 München (DE)**

(72) Erfinder:
• **Söllner, Christoph**
  **81475 München (DE)**
• **Otte, Romano**
  **81737 München (DE)**
• **Röckl, Matthias**
  **85521 Ottobrunn (DE)**

(56) Entgegenhaltungen:
**EP-A1- 1 647 951      EP-A1- 3 409 150**
**EP-A2- 1 921 427      EP-B1- 1 532 066**
**US-A- 4 202 387**

**Beschreibung**

Die Erfindung betrifft einen Getränkeautomat. Insbesondere betrifft die Erfindung einen Zusammenhang zwischen einem durch den Getränkeautomat auszugebenden Getränk und einem Getränkebehälter, in den die Ausgabe erfolgen soll.

Ein Getränkeautomat ist dazu eingerichtet, einen Getränkebehälter mit einer Flüssigkeit zu füllen. Der Getränkeautomat kann beispielsweise eine Kaffeemaschine und der Getränkebehälter eine Tasse umfassen und für einen Benutzer können verschiedene kaffeebasierte Getränke zur Auswahl stehen. Der Benutzer platziert eine passende Tasse an einer vorbestimmten Aufnahme des Getränkeautomaten und wählt ein Getränk, woraufhin die Kaffeemaschine eine vorbestimmte Menge des gewählten Getränks zubereitet und in die Tasse füllt.

Ist die Tasse zu klein für eine zubereitete Menge, so kann ein Teil des Getränks überlaufen. Wird die Zubereitung des Getränks beendet, wenn sich ein Füllstand in der Tasse deren Rand nähert, so kann eine Konzentration von Geschmacks- und Aromastoffen im Getränk abhängig von einem Volumen der Tasse sein. Die Qualität des zubereiteten Getränks kann dadurch verringert sein.

WO 1999 050 172 A1 schlägt vor, das Volumen eines Getränkebehälters mittels mehrerer schräg stehender optischer Sensoren zu vermessen.

Aus der EP 1 647 951 A1 ist ein Kalibrierungsverfahren zum Füllen eines Getränkebehälters bekannt, bei dem unter anderem eine Flüssigkeitsmenge, die während des Füllens durch den Getränkeautomaten ausgegeben wird, bestimmt wird.

Eine der vorliegenden Erfindung zu Grunde liegende Aufgabe besteht in der Angabe einer verbesserten Technik zur Ausgabe eines Getränks in einen Getränkebehälter. Die Erfindung löst diese Aufgabe mittels der Gegenstände der unabhängigen Ansprüche. Unteransprüche geben bevorzugte Ausführungsformen wieder.

Es wird vorgeschlagen, einen Getränkebehälter zunächst zu vermessen und bestimmte Messergebnisse abzuspeichern. Später kann der Getränkebehälter erkannt und in Abhängigkeit der abgespeicherten Informationen durch einen Getränkeautomaten befüllt werden.

Nach einem ersten Aspekt der Erfindung umfasst ein Kalibrierungsverfahren für einen Getränkeautomaten; Schritte des Abtastens eines ersten vertikalen Abstands zwischen einem oberen Rand eines Getränkebehälters, der sich auf einer Aufnahme des Getränkeautomats befindet, und einem über der Aufnahme angebrachten Abstandssensor; des Füllens des Getränkebehälters mit Flüssigkeit, bis ein zweiter vertikaler Abstand zwischen dem Abstandssensor und einem Inhalt des Getränkebehälters einen vorbestimmten Wert erreicht hat; des Bestimmens einer Flüssigkeitsmenge, die während des Füllens durch den Getränkeautomaten ausgegeben wurde; und des Abspeicherns des ersten vertikalen Abstands und der bestimmten Flüssigkeitsmenge in einer Speichervorrichtung des Getränkeautomaten.

Das Verfahren kann automatisiert ablaufen, nachdem ein unbekannter Getränkebehälter erkannt wurde. Der Vorgang kann transparent für einen Benutzer ablaufen, sodass dieser das Kalibrieren möglicherweise nicht einmal bemerkt. Ein Benutzungskomfort des Getränkeautomaten kann dadurch erhöht sein. Optional können noch weitere Informationen abgespeichert werden, die im Zusammenhang mit dem Getränkebehälter stehen. Im Folgenden kann der Getränkeautomat den Getränkebehälter oder einen anderen, gleich großen Getränkebehälter verbessert befüllen. Die Qualität eines zubereiteten und in den Getränkebehälter eingefüllten Getränks kann erhöht sein.

Vor dem Füllen wird erfindungsgemäß ein dritter vertikaler Abstand zwischen einem Abstandssensor und dem Inhalt des Getränkebehälters bestimmt. Auf der Basis des ersten und des dritten Abstands kann ein ungefähres Volumen des Getränkebehälters bestimmt werden. Das Füllen kann in Abhängigkeit des bestimmten Volumens gesteuert werden. Beispielsweise kann bestimmt werden, ob der Getränkebehälter für ein gewähltes Getränk geeignet ist. Dadurch kann der Benutzer in der Wahl eines Getränkebehälters unterstützt werden, der zu einem ausgewählten Getränk passt. Beispielsweise kann ein Hinweis ausgegeben werden, wenn ein Heißgetränk gewählt ist, der Getränkebehälter aber eine Tasse umfasst oder wenn ein Heißgetränk gewählt wurde, der Getränkebehälter jedoch ein Glas umfasst. Auch kann die Auswahl der an einer Benutzerschnittstelle angebotenen Getränke basierend auf Eigenschaften, z. B. dem Volumen, des platzierten Getränkebehälters verändert werden: so kann der Automat etwa bevorzugt eine Espresso-Auswahl darbieten, wenn eine kleine Tasse platziert wurde.

Es ist weiter bevorzugt, dass ein Signal ausgegeben wird, falls eine durch den Getränkeautomat auszugebende Flüssigkeitsmenge voraussichtlich das bestimmte Volumen des Getränkebehälters übersteigt. So kann beispielsweise verhindert werden, dass versucht wird, einen großen Milchkaffee in eine kleine Espressotasse zu füllen. Ein Überlaufen des Getränkebehälters kann verhindert werden. Optional kann das Füllen des Getränkebehälters in dieser Variante automatisch abgebrochen werden. Die auszugebende Flüssigkeitsmenge kann einem am Getränkeautomat gewählten Getränk zugeordnet sein.

In einer weiteren Ausführungsform kann in Abhängigkeit der Art einer auszugebenden Flüssigkeit der zweite Abstand kleiner als der erste Abstand sein. Handelt es sich beispielsweise um ein aufgeschäumtes Getränk wie eine Latte Macchiato, die aus einem flüssigen Anteil und einem darauf schwimmenden Schaum besteht, so kann zugelassen werden, dass der Schaum in vertikaler Richtung den oberen Rand des Getränkebehälters übersteigt. Handelt es sich hingegen um ein kohlensäurehaltiges Kaltgetränk, das während des Einschenkens ebenfalls schäumen kann, so kann verhindert werden, dass der Schaum den oberen Rand des Getränkebehälters übersteigt.

Die über den Getränkebehälter gesammelten Informationen können vorteilhaft verwendet werden, um den Getränkeautomat im Folgenden zu steuern.

Nach einem zweiten Aspekt der Erfindung umfasst ein Steuerverfahren für einen Getränkeautomaten Schritte des Abtastens eines ersten vertikalen Abstands zwischen einem oberen Rand eines Getränkebehälters, der horizontal an eine Aufnahme des Getränkeautomaten bewegt wird, und einem über der Aufnahme angebrachten Abstandssensor; des Bestimmens einer Flüssigkeitsmenge, die dem ersten vertikalen Abstand zugeordnet ist; und des Füllens des Getränkebehälters mit einer Flüssigkeit der bestimmten Menge.

Anders ausgedrückt kann der Getränkebehälter anhand der Höhe seines oberen Randes über der Aufnahme des Getränkeautomaten identifiziert werden. Der Getränkeautomat kann daraufhin eine Menge an Flüssigkeit zubereiten und bereitstellen, die an den Getränkebehälter angepasst ist. Der Getränkebehälter kann automatisch auf einen Füllstand gefüllt werden, der von einem Benutzer als angenehm empfunden werden kann. Eine Konzentration von Geschmacks- oder Aromastoffen in der bereitgestellten Flüssigkeit kann verbessert durch den Getränkeautomaten gesteuert werden. Die Qualität des bereitgestellten Getränks kann dadurch verbessert sein.

Das Füllen kann abgebrochen werden, falls ein zweiter vertikaler Abstand zwischen dem Abstandssensor und einem Inhalt des Getränkebehälters einen vorbestimmten Wert erreicht. Ein Überfüllen des Getränkebehälters kann verhindert werden. Der Abstandssensor kann auf einfache Weise dazu eingerichtet sein, zuerst eine Höhe des oberen Randes des Getränkebehälters über der Ablage und später einen Füllstand im Getränkebehälter zu bestimmen. Der Abstandssensor kann hierzu einfach und robust aufgebaut sein.

In Abhängigkeit der Art einer auszugebenden Flüssigkeit kann der zweite Abstand kleiner als der erste Abstand sein, wie oben mit Bezug auf ein Kalibrierungsverfahren genauer beschrieben ist.

Vor dem Füllen wird erfindungsgemäß ein dritter vertikaler Abstand zwischen dem Abstandssensor und dem Inhalt des Getränkebehälters bestimmt. Auf der Basis des ersten und des dritten Abstands wird ein ungefähres Volumen des Getränkebehälters bestimmt und ein Signal ausgegeben, falls eine Flüssigkeitsmenge, die einem gewählten Getränk zugeordnet ist, das bestimmte Volumen um mehr als ein vorbestimmtes Maß übersteigt. In diesem Fall kann das Füllen auch verhindert oder ein bereits begonnenes Füllen kann abgebrochen werden. Ein Überfüllen des Getränkebehälters kann verhindert sein. Die Ausgabe des Signals kann beispielsweise auf optische, akustische oder haptische Weise erfolgen. In einer Ausführungsform kann ein digitaler Assistent wie beispielsweise Alexa oder Cortana zur Realisierung der Ausgabe verwendet werden.

In einer weiteren Ausführungsform wird das Füllen ermöglicht, wenn ein Abstand zwischen dem Abstandssensor und dem Inhalt des Getränkebehälters in einem vorbestimmten Bereich liegt. Anders ausgedrückt kann das Füllen des Getränkebehälters automatisch beginnen, nachdem bestimmt wurde, dass der Getränkebehälter korrekt positioniert ist und optional auch, dass er zunächst leer ist. Das Füllen eines bereits teilweise gefüllten Getränkebehälters kann verhindert oder abgebrochen werden oder es kann ein Signal bereitgestellt werden, das auf den bereits teilweise gefüllten Getränkebehälter hinweist.

Optional wird ein Signal ausgegeben, falls der zweite Abstand nach dem Ausgeben der vorbestimmten Flüssigkeitsmenge nicht zu einem vorbestimmten Abstand korrespondiert, der dem ersten Abstand zugeordnet ist. Sollte sich also nach dem Einfüllen der vorbestimmten Flüssigkeitsmenge ein vorbestimmter Füllstand am Getränkebehälter nicht einstellen, so kann ein Kalibrierungsfehler vorliegen. Das Signal kann auf die Notwendigkeit einer Neukalibrierung hinweisen. Zum Kalibrieren wird bevorzugt ein hierin beschriebenes Kalibrierungsverfahren durchgeführt.

Nach einem weiteren Aspekt der Erfindung umfasst ein erster Getränkeautomat eine Aufnahme für einen Flüssigkeitsbehälter; einen über der Aufnahme angebrachten Abstandssensor; eine Ausgabevorrichtung, die zur Ausgabe von Flüssigkeit im Bereich der Aufnahme eingerichtet ist; eine Speichervorrichtung und eine Verarbeitungseinrichtung. Dabei ist die Verarbeitungseinrichtung dazu eingerichtet, ein hierin beschriebenes Steuerverfahren durchzuführen.

Nach noch einem weiteren Aspekt der Erfindung umfasst ein zweiter Getränkeautomat aufbauend auf den ersten Getränkeautomaten zusätzlich eine Vorrichtung zur Bestimmung einer Menge ausgegebener Flüssigkeit. Die Verarbeitungseinrichtung ist dabei dazu eingerichtet, alternativ oder zusätzlich zum genannten Steuerverfahren ein hierin beschriebenes Kalibrierungsverfahren durchzuführen.

Die Verarbeitungseinrichtung kann jeweils dazu eingerichtet sein, eines der hierin beschriebenen Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile der einzelnen Verfahren können auf den korrespondierenden Getränkeautomaten übertragbar sein oder umgekehrt.

Beide Getränkeautomaten können einfach und robust aufgebaut sein. Insbesondere die Anbringung des Abstandssensors zur Bestimmung vertikaler Abstände kann unempfindlich sein. Der Abstandssensor kann insbesondere in einer fest vorbestimmten Höhe über der Aufnahme angebracht werden. Der Abstandssensor kann seine Höhe über der Aufnahme selbst bestimmen und sich dadurch kalibrieren. Der Getränkeautomat kann leicht aufgestellt und in Betrieb genommen werden. Für die beschriebene Technik der abgespeicherten Flüssigkeitsmengen für unterschiedliche Getränkebehälter muss ein Benutzer des Getränkeautomaten nicht eigens informiert werden. Die hierin beschriebene Technik kann elegant und dezent im Hintergrund durchgeführt werden.

Es ist bevorzugt, dass der Abstandssensor auf der Basis von Licht arbeitet, das vom Abstandssensor ausgesandt, an einem Objekt wenigstens teilweise reflektiert und vom Abstandssensor erfasst wird. Der Abstand kann auf der Basis der Ausbreitungsgeschwindigkeit von Licht bestimmt werden, wobei man von einem Time-of-Flight-Sensor sprechen kann. Ein derartiger Abstandssensor kann eine vorteilhaft hohe Messfrequenz und/oder eine vorteilhaft hohe Genauigkeit aufweisen. Eine Lichtquelle und ein Lichtdetektor des Abstandssensors können geometrisch voneinander entfernt oder aneinander angenähert werden. Der Abstandssensor kann so verbessert an seinen Einsatzzweck angepasst und mit einem Getränkeautomaten integriert werden.

Es ist besonders bevorzugt, dass der Abstandssensor einen Laser zur Aussendung des Lichts umfasst. Der Laser kann im sichtbaren oder unsichtbaren Bereich arbeiten und stellt bevorzugt einen Lichtstrahl bereit, der einen relativ kleinen Durchmesser hat, beispielsweise im Bereich von unter 2 unter 1 mm, und sich zwischen dem Abstandssensor und der Aufnahme praktisch nicht aufweitet. Dadurch kann eine rasche und genaue Messung des vertikalen Abstands durchgeführt werden.

Zur Bestimmung des oberen Rands des Getränkebehälters werden zwei unterschiedliche Varianten vorgeschlagen.

In einer ersten Variante ist der Abstandssensor dazu eingerichtet, den oberen Rand des Getränkebehälters auf der Basis eines minimalen Abstands zum Getränkebehälter zu bestimmen, während der Getränkebehälter horizontal an die Aufnahme bewegt wird.

Die Aufnahme kann eine ebene Fläche umfassen, auf die der Getränkebehälter platziert und dann an eine Position geschoben wird. Dabei passiert der Getränkebehälter den Abstandssensor, sodass dieser während der Bewegung des Getränkebehälters mehrere vertikale Abstände bestimmen kann. Der kleinste bestimmte Abstand kann dann dem oberen Rand zugeordnet werden. Der Abstandssensor kann hierbei ohne bewegliche Teile auskommen, sodass er einfach, kostengünstig und robust aufgebaut sein kann. Eine Position des Abstandssensors am Getränkeautomat, insbesondere bezüglich der Aufnahme, kann durch die Bauart fest vorgegeben sein.

In einer zweiten Variante ist der Abstandssensor dazu eingerichtet, eine Messrichtung des Abstandssensors bezüglich der Vertikalen zu verändern und den oberen Rand des Getränkebehälters auf der Basis einer Messrichtung zu bestimmen, bei der ein minimaler Abstand zum an der Aufnahme still stehenden Getränkebehälter besteht.

Dabei steht der Getränkebehälter gegenüber dem Abstandssensor still und der Abstandssensor bewegt sich, indem seine Messrichtung verändert wird. Die Messrichtung kann insbesondere um einen variablen Winkel gegenüber der Vertikalen geändert werden, beispielsweise um ±20°. Es ist bevorzugt, dass die Messrichtung in einer insbesondere vertikalen Ebene liegt, die durch einen Bereich verläuft, in welchem sich üblicherweise die Mitte des Getränkebehälters befindet. Der Bereich kann unterhalb einer Ausgabeöffnung des Getränkeautomaten für Flüssigkeit liegen. Wurden Abstandsmessungen über verschiedene Messrichtungen bestimmt, so kann diejenige bestimmt werden, die zum oberen Rand des Getränkebehälters korrespondiert. Die Höhe des oberen Rands über der Aufnahme oder eine vertikale Komponente des Abstands zwischen dem Abstandssensor und dem oberen Rand können dann auf der Basis der zugeordneten Messrichtung bestimmt werden.

Die Erfindung wird nun unter Bezug auf die beiliegenden Figuren genauer beschrieben, in denen:

Figur 1     ein beispielhaftes System mit einem Getränkeautomaten;

Figur 2     ein Ablaufdiagramm eines ersten beispielhaften Verfahrens zum Kalibrieren eines Getränkeautomaten;

Figur 3     ein Ablaufdiagramm eines zweiten beispielhaften Verfahrens zum Steuern eines Getränkeautomaten;

Figur 4     verschiedene Maße an einem beispielhaften Getränkebehälter;

Figur 5     eine Darstellung von beispielhaften Informationen, die bezüglich eines Getränkebehälters abgespeichert werden können;

Figur 6     ein erstes Messprinzip für einen Getränkeautomaten; und

Figur 7     ein zweites Messprinzip für einen Getränkeautomaten darstellt.

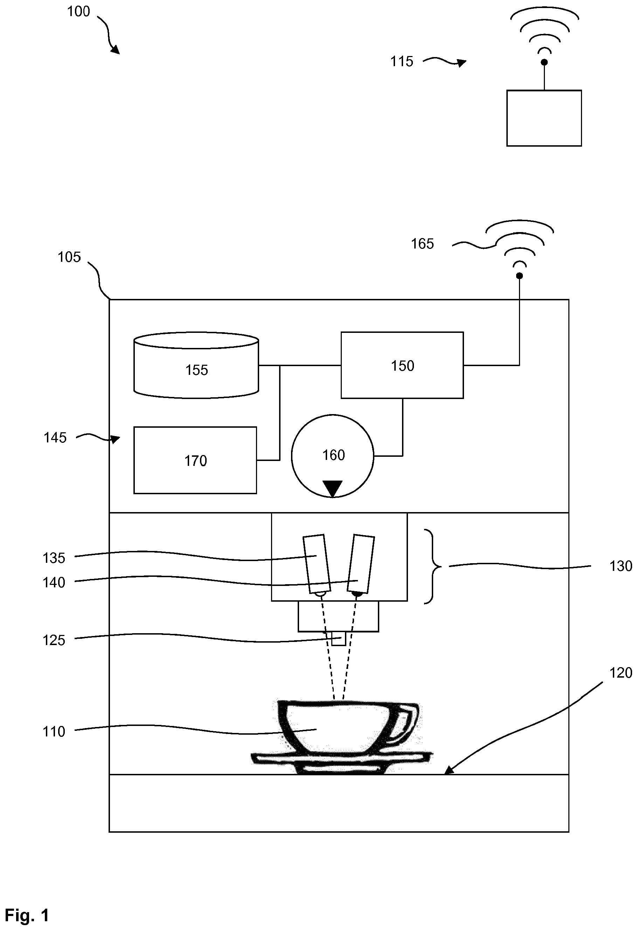

Figur 1 zeigt ein beispielhaftes System 100 mit einem Getränkeautomaten 105, einem Getränkebehälter 110 und einer optionalen externen Stelle 115. Der Getränkeautomat 105 ist dazu eingerichtet, auf Anforderung ein Getränk bereitzustellen. Das Getränk kann ein Heißgetränk oder ein Kaltgetränk umfassen und es kann vor der Ausgabe zubereitet werden. Beispielsweise kann der Getränkeautomat 105 einen Mineralwasserbrunnen, eine Bierzapfanlage oder einen Kaffeeautomaten umfassen. Der Getränkeautomat 105 kann dazu eingerichtet sein, unterschiedliche Getränke, weiter optional in unterschiedlichen Ausführungsformen und/oder unterschiedlichen Portionsgrößen bereitzustellen. Eine Portionsgröße entspricht dabei üblicherweise einer Menge von Flüssigkeit, die durch einen zugeordneten Getränkebehälter 110 aufgenommen werden kann.

Der Getränkeautomat 105 umfasst eine Aufnahme 120, auf der ein Getränkebehälter 110 platziert werden kann. Der Getränkebehälter 110 betrifft üblicherweise ein Trinkgefäß, insbesondere eine Tasse, eine Schale oder ein Glas. Unterschiedlichen Getränken, Ausführungsformen oder Portionsgrößen können unterschiedliche Getränkebehälter 110 zugeordnet sein. In einem Haushalt, in welchem der Getränkeautomat 105 aufgestellt ist, sind üblicherweise nur wenige unterschiedliche Arten von Getränkebehältern 110 mit dem Getränkeautomat 105 in Verwendung, wobei jede Art durch eine Vielzahl im Wesentlichen gleich geformter Getränkebehälter 110 gebildet sein kann. Oberhalb der Aufnahme 120 oder oberhalb eines vorbestimmten Abschnitts der Aufnahme 120 kann sich eine Ausgabeöffnung 125 für Flüssigkeit - das Getränk - befinden. Die Aufnahme 120 ist bevorzugt so gestaltet und am Getränkeautomat 105 angebracht, dass der Getränkebehälter 110 in horizontaler Richtung auf der Aufnahme 120 verschoben wird, um ihn korrekt zu positionieren.

In einem Bereich vertikal über der Aufnahme 120 ist ein Abstandssensor 130 angebracht, der dazu eingerichtet ist, einen vertikalen Abstand zwischen sich und einem unter ihm liegenden Objekt optisch zu bestimmen. Bevorzugt umfasst der Abstandssensor 130 eine Lichtquelle 135 und einen Lichtdetektor 140. Ein horizontaler Abstand zwischen der Lichtquelle 135 und dem Lichtdetektor kann in unterschiedlichen Ausführungsformen zwischen null und einem praktikablen Wert liegen, der üblicherweise durch eine Breite des Getränkeautomaten 105 bestimmt ist. Der Abstandssensor 130 ist bevorzugt fest am Getränkeautomat 105 angebracht. Eine Messrichtung verläuft bevorzugt vertikal, kann aber auch einen vorbestimmten Winkel mit der Vertikalen einschließen und schräg verlaufen. Der Abstandssensor 130 kann beispielsweise vom Typ STM VL53L0X sein. Eine Messgenauigkeit des Abstandssensors 130 kann im Bereich von ca. 1 mm oder besser liegen und eine Messrate kann bevorzugt in einem Bereich von ca. 50 Hz oder höher liegen.

In einer anderen Ausführungsform kann der Abstandssensor 130 auch beispielsweise auch durch eine vertikale Anordnung von Lichtschranken realisiert sein. Nicht alle hierin beschriebenen Ausführungsformen können mit einem derartigen Abstandssensor 130 realisiert werden.

Eine Steuervorrichtung 145 des Getränkeautomaten 105 umfasst eine Verarbeitungseinrichtung 150, eine Speichervorrichtung 155 und eine Einrichtung 160 zur Bestimmung einer Flüssigkeitsmenge, die durch den Getränkeautomat 105 ausgegeben wird. In einer ersten Variante kann die Einrichtung 160 einen Durchflussmesser umfassen, der beispielsweise mechanisch oder auf der Basis von Ultraschall arbeitet und einen Volumenstrom der ausgegebenen Flüssigkeit bestimmt. In einer anderen Ausführungsform umfasst die Einrichtung 160 eine Pumpe, die einen fest vorbestimmten Volumenstrom von Flüssigkeit bereitstellt. Über die Laufzeit der Pumpe kann die bereitgestellte Flüssigkeitsmenge bestimmt werden.

Optional umfasst die Steuervorrichtung 145 ferner eine Kommunikationseinrichtung 165 zur Kommunikation mit der externen Stelle 115. Die externe Stelle 115 kann die Funktion der Speichervorrichtung 155 erfüllen und bestimmte Informationen abspeichern oder bereitstellen. Außerdem kann die externe Stelle 115 zumindest einen Teil der Verarbeitungsaufgaben der Verarbeitungseinrichtung 150 durchführen. Die Kommunikationseinrichtung 165 ist bevorzugt drahtlos ausgeführt und die externe Stelle 115 kann beispielsweise als Server oder als Dienst, ortsabstrahiert in einer Cloud, realisiert sein. Eine Interaktion eines Benutzers mit dem Getränkeautomat 105 kann unter Zuhilfenahme der externen Stelle 115 und/oder der Kommunikationseinrichtung 165 erfolgen. Dazu kann der Benutzer ein entsprechend ausgerüstetes Endgerät verwenden, welches eine Eingabe- und/oder Ausgabevorrichtung umfasst. Eine zusätzliche oder alternative Ein- und/oder Ausgabevorrichtung 170 kann am Getränkeautomat 105 vorgesehen sein. Weiteren Komponenten, die zur Bereitstellung eines Getränks in den Getränkebehälter 110 erforderlich sind, sind in Figur 1 nicht dargestellt.

Es wird vorgeschlagen, dass die Steuervorrichtung 145 einen vorbestimmten Getränkebehälter 110 - der bevorzugt Vertreter eines vorbestimmten Typs von gleich geformten Getränkebehältern 110 ist - anhand der vertikalen Höhe seines oberen Randes über der Aufnahme 120 identifiziert und eine Flüssigkeitsmenge, die in den Getränkebehälter 110 eingefüllt werden soll, bestimmt. Diese Menge kann zusammen mit einem Hinweis auf die Identifikation des Getränkebehälters 110 in der Speichervorrichtung 155 abgelegt werden. In einer späteren Steuerphase kann der Getränkebehälter 110 erneut identifiziert und ihm zugeordnete Informationen aus der Speichervorrichtung 155 bereitgestellt werden. Der Getränkebehälter 110 kann dann in Abhängigkeit dieser Informationen durch den Getränkeautomaten 105 gefüllt werden.

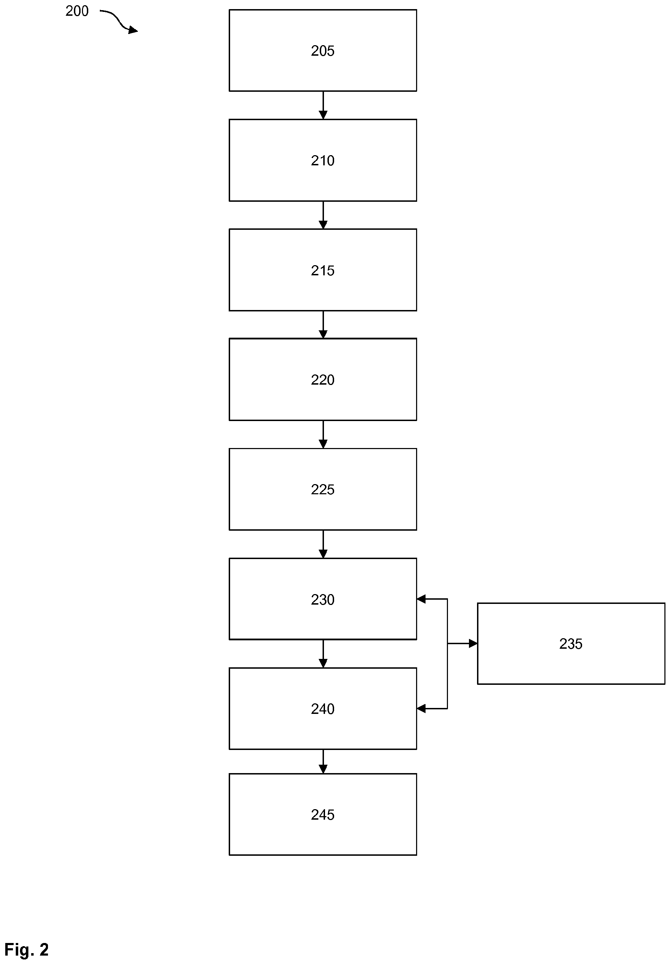

Figur 2 zeigt ein Ablaufdiagramm eines ersten beispielhaften Verfahrens zum Kalibrieren eines Getränkeautomaten 105. Das Verfahren 200 kann insbesondere mittels der mit dem Abstandssensor 130 verbundenen Steuervorrichtung 145 des Getränkeautomaten 105 von Figur 1 durchgeführt werden.

In einem Schritt 205 wird der Getränkebehälter 110 horizontal in den Getränkeautomat 105 bewegt. Dazu wird der Getränkebehälter 110 bevorzugt auf die Aufnahme 120 gestellt und horizontal geschoben oder gezogen, bis er in einem Bereich unterhalb der Ausgabeöffnung 125 steht. Das Bewegen des Getränkebehälters 110 soll derart erfolgen, dass in einem Schritt 210 eine vertikale Höhe des oberen Randes des Getränkebehälters 110 bestimmt werden kann. Der obere Rand entspricht dabei bevorzugt dem höchsten Punkt des Getränkebehälters 110 über der Aufnahme 120.

In einem optionalen Schritt 215 kann eine vertikale Höhe eines Bodens oder Grunds des Getränkebehälters 110 bestimmt werden. Diese Höhe entspricht bevorzugt der geringsten Höhe über der Aufnahme 120 auf der Innenseite des Getränkebehälters, bzw. dem größten vertikalen Abstand zwischen dem Abstandssensor 130 und dem Getränkebehälter 110 auf dessen Innenseite. Ist der Getränkebehälter 110 leer, so kann diese Höhe ebenfalls charakteristisch für den Getränkebehälter 110 sein. Optional wird der Getränkebehälter 110 anhand der Höhe des oberen Rands und der Höhe des Bodens identifiziert. Unter Umständen kann die auf der Innenseite des Getränkebehälters 110 bestimmte Höhe auch darauf hinweisen, dass der Getränkebehälter 110 nicht leer ist.

In einem Schritt 220 kann ein ungefähres Volumen des Getränkebehälters 110 auf der Basis der bestimmten vertikalen Höhen bestimmt werden. In einem Schritt 225 kann ein durch den Getränkeautomat 105 auszugebendes Getränk bestimmt werden. In einem nachfolgenden Schritt 230 kann das Getränk in den Getränkebehälter 110 eingefüllt werden. Das Einfüllen kann beendet sein, wenn in einem Schritt 240 bestimmt wird, dass eine vertikale Höhe eines Inhalts des Getränkebehälters 110 einen vorbestimmten Wert erreicht hat. Dieser Wert kann abhängig von der Art des Getränks und/oder dem Getränkebehälter sein. Beispielsweise kann das Füllen beendet werden, wenn der Inhalt auf einer vorbestimmten Höhe unter dem oberen Rand des Getränkebehälters 110 liegt, beispielsweise ca. 1cm darunter. Das Füllen kann in Abhängigkeit des im Schritt 220 bestimmten ungefähren Volumens erfolgen. Erscheint das bestimmte Volumen unplausibel bezüglich eines Verlaufs des Füllvorgangs, so kann eine entsprechende Interaktion mit einem Benutzer in einem Schritt 235 erfolgen. Interaktionen mit dem Benutzer sind auch in anderen Schritten möglich, insbesondere während des Schritts 230. Die Interaktion kann eine Eingabe und/oder eine Ausgabe von Informationen umfassen. Der Benutzer kann beispielsweise die Möglichkeit haben, ein Ende des Füllvorgangs selbst zu überwachen und einen entsprechenden Hinweis darauf einzugeben. Außerdem kann der Kalibrierungsvorgang optional durch den Benutzer abgebrochen werden.

In einem Schritt 245 ist der Getränkebehälter 110 mit einer vorbestimmten Flüssigkeitsmenge des Getränks angefüllt. Informationen über die Flüssigkeitsmenge und eine Charakterisierung des Getränkebehälters 110 können einander zugeordnet und in einem Datensatz organisiert werden, der bevorzugt in der Speichervorrichtung 155 abgelegt werden kann. Zu den abgespeicherten Informationen können beispielsweise die Höhe des oberen Randes, die Höhe des Behälterbodens, die Flüssigkeitsmenge, die verwendete Getränkeart oder die Höhe des Inhalts nach dem Befüllen umfassen.

Das Verfahren 200 kann alternativ mit einer Testflüssigkeit oder einem vorbestimmten Getränk durchgeführt werden. Außerdem kann der Kalibrierungsvorgang durch einen Benutzer initiiert werden oder automatisch gestartet werden, beispielsweise nachdem ein unbekannter Getränkebehälter 110 auf der Aufnahme 120 erfasst wurde.

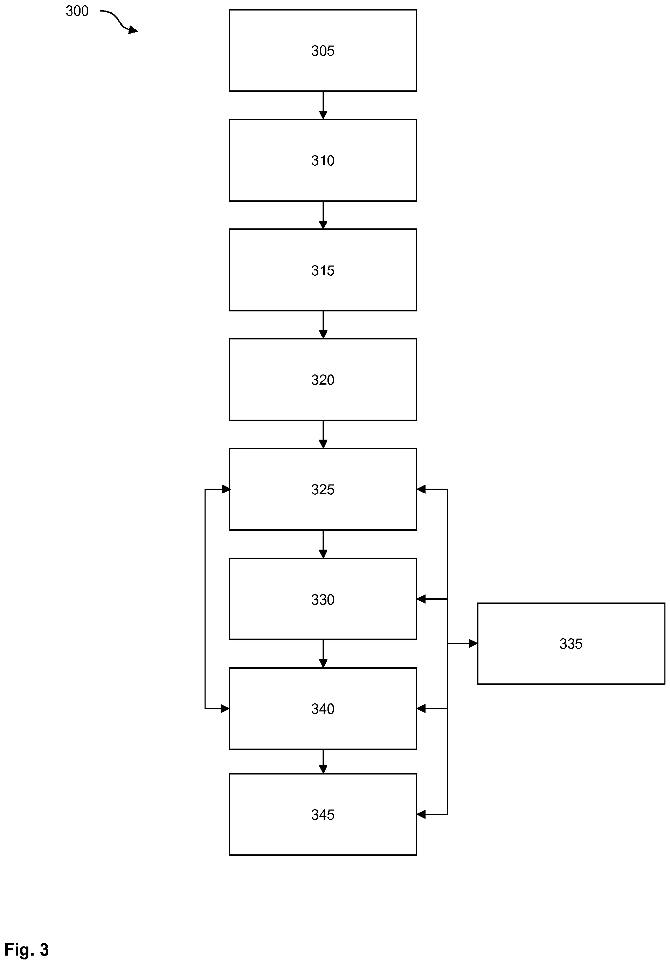

Figur 3 zeigt ein Ablaufdiagramm eines zweiten beispielhaften Verfahrens zum Steuern eines Getränkeautomaten 105. Das zweite Verfahren 300 kann ebenfalls mittels des Getränkeautomaten 105 und gesteuert durch die Steuervorrichtung 145 ausgeführt werden. Dabei wird üblicherweise vorausgesetzt, dass bestimmte Informationen in der Speichervorrichtung 155 abgelegt sind, die insbesondere mittels des ersten Verfahrens 200 dort abgelegt werden können.

In weiten Teilen entsprechen einzelne Schritte des Verfahrens 300 korrespondierenden Schritten des Verfahrens 200. Zueinander korrespondierende Schritte sind an zueinander korrespondierenden Stellen der Figuren 2 und 3 dargestellt und tragen zueinander korrespondierende Bezugszeichen in den letzten beiden Stellen.

In einem ersten Schritt 305 wird der Getränkebehälter 110 in horizontaler Richtung in den Getränkeautomat 105 eingesetzt. In einem Schritt 310 wird die vertikale Höhe des oberen Randes des Getränkebehälters 110 bestimmt. Optional kann zusätzlich eine vertikale Höhe des Bodens des Getränkebehälters 110 bestimmt werden, wie oben bezüglich des Schritts 215 beschrieben ist.

In einem Schritt 315 kann auf der Basis der bestimmten vertikalen Höhe der Getränkebehälter 110 bzw. eine Art von Getränkebehältern bestimmt werden, zu denen der Getränkebehälter 110 gehört. Informationen, die diesem Getränkebehälter 110 zugeordnet sind, können aus dem Datenspeicher 155 entnommen werden.

Optional kann in einem Schritt 320 ein ungefähres Volumen des Getränkebehälters 110 auf der Basis zuvor durchgeführter vertikaler Höhenmessungen bestimmt werden. In einem Schritt 325 kann eine Auswahl eines Getränks durch einen Benutzer erfasst werden. In einem Schritt 330 kann das gewählte Getränk in den Getränkebehälter 110 gefüllt werden. Eine Zubereitung und das Einfüllen des Getränks in den Getränkebehälter 110 können in Abhängigkeit der im Datenspeicher 155 abgelegten Flüssigkeitsmenge erfolgen. Optional kann in einem Schritt 340 periodisch oder fortlaufend eine vertikale Höhe eines Inhalts des Getränkebehälters 110 mittels des Abstandssensors 130 bestimmt werden. In einem Schritt 345 kann bestimmt werden, ob sich diese vertikale Höhe in einer vorbestimmten Weise verhält. Nähert sich die Höhe beispielsweise nicht einer vorbestimmten vertikalen Höhe an, wenn sich eine bereitgestellte Flüssigkeitsmenge der abgespeicherten Flüssigkeitsmenge annähert, so kann ein Signal ausgegeben und/oder das Füllen unterbrochen oder beendet werden. Ferner kann in einem Schritt 335 eine Interaktion mit einem Benutzer erfolgen. Eine Interaktion kann auch bezüglich eines anderen Schritts des Verfahrens 300 erfolgen, insbesondere eines der Schritte 325 bis 345.

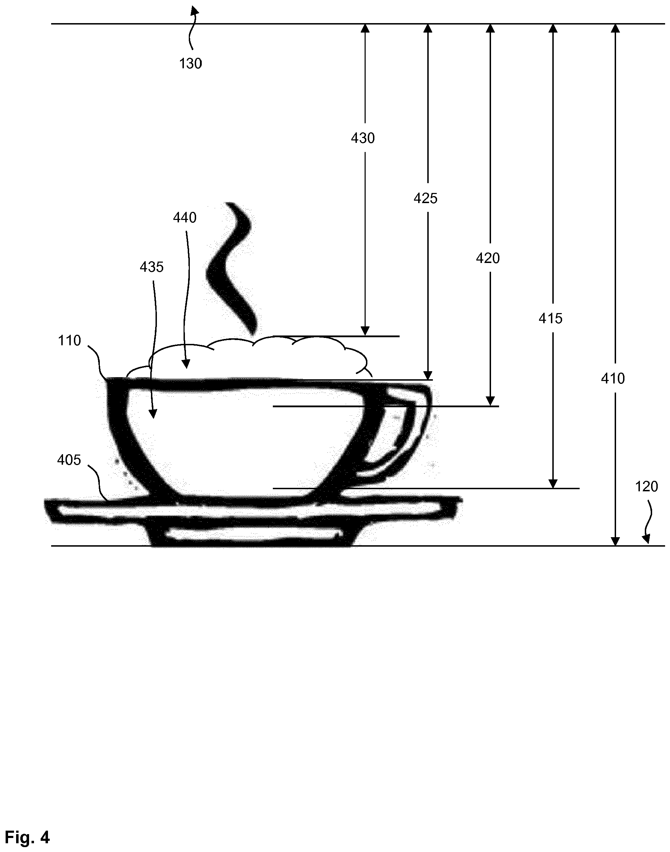

Figur 4 zeigt verschiedene Maße an einem beispielhaften Getränkebehälter 110. Rein exemplarisch ist der dargestellte Getränkebehälter 110 auf einem Unterteller 405 auf der Aufnahme 120 platziert. Dabei kann der Unterteller 405 als Teil des Getränkebehälters 110 betrachtet werden. Derselbe Getränkebehälter 110 ohne den Unterteller 405 wäre dann ein anderer Getränkebehälter 110 bzw. würde einer anderen Art von Getränkebehältern zugeordnet werden.

Eine erste vertikale Höhe 410 betrifft einen vertikalen Abstand zwischen dem Abstandssensor 130 und der Aufnahme 120. Dieser Abstand kann mittels des Abstandssensors 130 bestimmt werden, wenn sich kein anderes Objekt im Bereich der Aufnahme 120 befindet. Auf der Basis der ersten vertikalen Höhe 410 können andere vertikale Höhen, die auf den Abstandssensor 130 bezogen sind, auf die Aufnahme 120 bezogen werden und umgekehrt. Dazu wird der betreffende Wert von der ersten vertikalen Höhe 410 abgezogen.

Eine zweite vertikale Höhe 415 betrifft einen Abstand zwischen dem Abstandssensor 130 und einem Boden des Getränkebehälters 110. Eine dritte vertikale Höhe 420 betrifft einen Abstand zwischen dem Abstandssensor 130 und einem Inhalt des Getränkebehälters 110. Im Allgemeinen weist die dritte vertikale Höhe auf einen Flüssigkeitsspiegel im Getränkebehälter 110 hin.

Eine vierte vertikale Höhe 425 betrifft einen Abstand zwischen dem Abstandssensor 130 und einem oberen Rand des Getränkebehälters 110. Eine fünfte vertikale Höhe 430 kann verwendet werden, wenn das Getränk nicht nur eine Flüssigkeit 435, sondern auch einen darauf schwimmenden Schaum 440 umfasst. Ob dies der Fall ist, kann anhand eines gewählten Getränks zugeordnet sein. Die fünfte vertikale Höhe 430 kann dann die vierte vertikale Höhe 425, die den oberen Rand des Getränkebehälters 110 definiert, übersteigen.

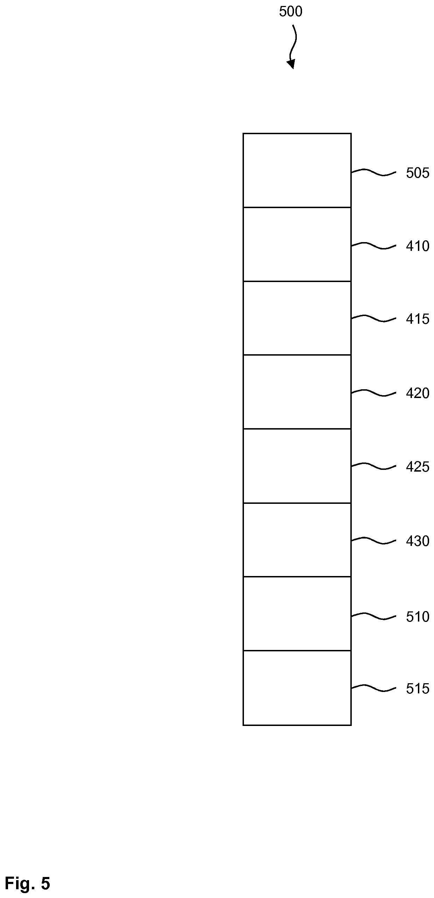

Figur 5 zeigt eine Darstellung eines beispielhaften Datensatzes 500, der beispielhafte Informationen umfasst, die bezüglich eines Getränkebehälters 110 im Datenspeicher 155 der Steuervorrichtung 145 eines Getränkeautomaten 105 abgespeichert sein kann. Der Datensatz 500 umfasst üblicherweise zumindest die Flüssigkeitsmenge 505 und wenigstens eine vertikale Höhe 410 bis 430, die zur Identifikation des Getränkebehälters 110 genutzt werden kann. Zusätzlich können beispielsweise ein Getränk 510 oder eine Variante oder Zubereitungsart 515 des Getränks umfasst sein. Die Variante kann beispielsweise angeben, ob das Getränk in einer großen oder einer kleinen Portion gewünscht wird (z.B. einfacher vs. doppelter Espresso) oder ob ein Cappuccino mit viel oder wenig Schaum 440 zubereitet werden soll. Weitere Informationen, die insbesondere hierin genannt sind, können ebenfalls vom Datensatz 500 umfasst sein.

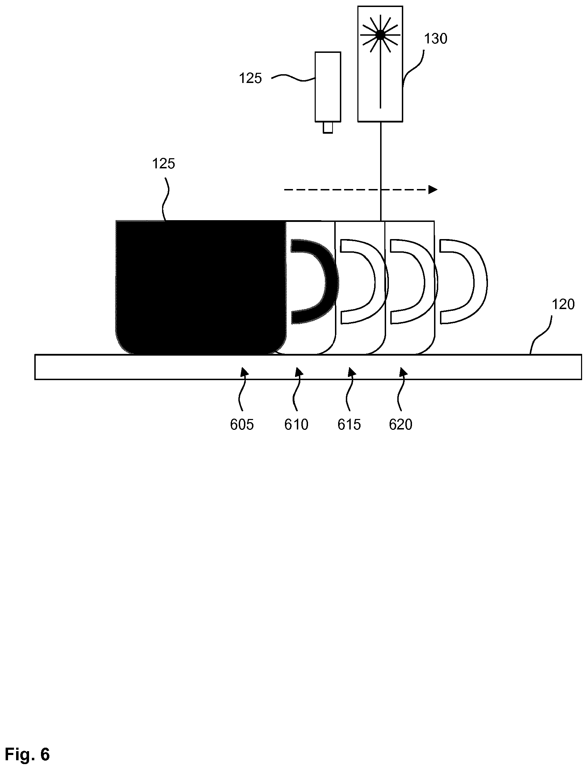

Figur 6 zeigt schematisch ein erstes Messprinzip, das zur Bestimmung des oberen Rands eines Getränkebehälters 110 an einem Getränkeautomaten 105 verwendet werden kann. Die im Folgenden beschriebene Vorgehensweise kann insbesondere für die Schritte 205, 210 des Verfahrens 200 (vgl. oben mit Bezug auf Figur 2) oder für die Schritte 305, 310 des Verfahrens 300 (vgl. oben mit Bezug auf Figur 3) verwendet werden. Unter Umständen kann das Messprinzip auch zur Bestimmung anderer vertikaler Abstände (vgl. oben mit Bezug auf Figur 4) verwendet werden.

Die Aufnahme 120 umfasst eine horizontale Fläche, beispielsweise in Form eines Tabletts oder eines Abtropfblechs. Der Getränkebehälter 110 kann, beispielsweise durch einen Benutzer, derart auf der Aufnahme 120 platziert werden, dass er horizontal bewegt werden muss, um vom Getränkeautomaten 105 verarbeitet zu werden. Dazu kann der Getränkebehälter 110 insbesondere neben einer Ausgabeöffnung 125 für Flüssigkeit platziert und dann auf der Aufnahme 120 in eine Position geschoben werden, in welcher sich die obere Öffnung des Getränkebehälters 110 unter der Ausgabeöffnung 125 und weiter bevorzugt unter dem Abstandssensor 130 befindet. Beispielhaft wird davon ausgegangen, dass eine Messrichtung des Abstandssensors 130 in vertikaler Richtung verläuft; eine schräge Messrichtung ist jedoch auch möglich.

In der Darstellung von Figur 6 ist der Getränkebehälter 110 in beispielhaften Positionen 605, 610, 615 und 620 dargestellt. Der Getränkebehälter 110 kann in der beispielhaften ersten Position 605 auf der Aufnahme 120 abgestellt werden, wobei er sich, bezogen auf die Messrichtung, zunächst neben dem Abstandssensor 130 befindet. Mit dem Abstandssensor 130 kann bis zu diesem Zeitpunkt nur die erste vertikale Höhe 410 (vgl. Figur 4) bestimmt werden. Der Getränkebehälter 110 kann weiter in die zweite Position 610 geschoben werden, sodass der Abstandssensor 130 im vorliegenden Beispiel einen vertikalen Abstand zu einem Henkel des Getränkebehälters 110 bestimmen kann. In der dritten Position 615 liegt der obere Rand des Getränkebehälters 110 unter dem Abstandssensor 130, sodass die vierte vertikale Höhe 425 bestimmt werden kann. In der vierten Position 620 befindet sich die Öffnung des Getränkebehälters 110 unter dem Abstandssensor 130, sodass die zweite vertikale Höhe 415 bestimmt werden kann. Wird nun Flüssigkeit in den Getränkebehälter 110 eingefüllt, so können die dritte vertikale Höhe 420, und im weiteren Verlauf gegebenenfalls die fünfte vertikale Höhe 430 bestimmt werden.

Sollte die Messrichtung des Abstandssensors 130 nicht vertikal verlaufen, so kann die vertikale Höhe zwischen dem Abstandssensor 130 und einem Objekt

$$b = \frac{c}{\cos \tau}$$

wie folgt bestimmt werden: , wobei b die vertikale Höhe ist, c der bestimmte Abstand und $\tau$ der Winkel, um den die Messrichtung von der Vertikalen abweicht. Der Winkel kann in einer komplexen Ausführung über Sensorik mit Hilfe einer Kontrollschleife erfasst werden, von der Mikrocontroller-Einheit vorgegeben werden ohne Kontrolle oder auch über eine implizite zeitliche Erfassung bestimmt werden, bei welcher der Aktor in einer festgelegten Zeit einen bestimmten Winkelbereich überfährt.

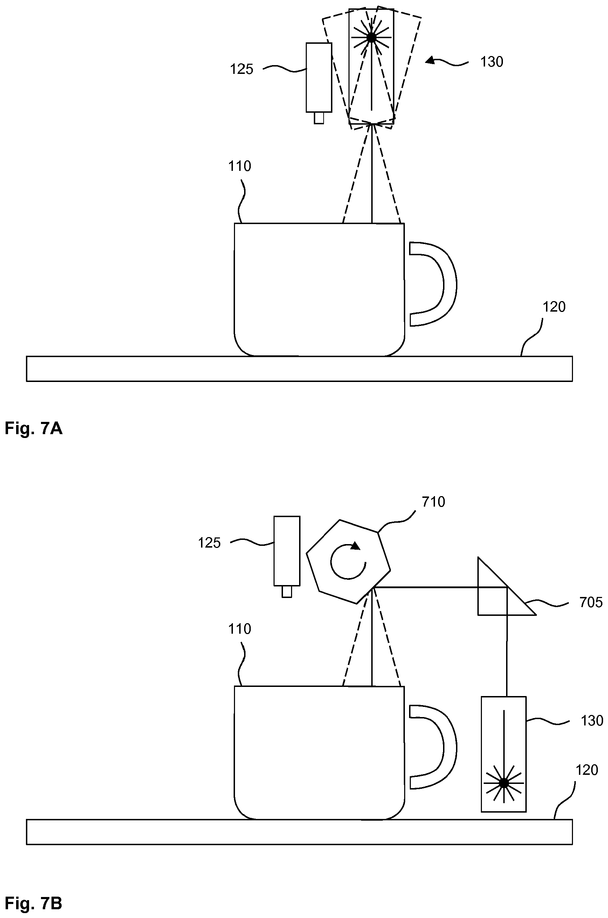

Figur 7 zeigt schematisch ein zweites Messprinzip, das zur Bestimmung des oberen Rands eines Getränkebehälters 110 an einem Getränkeautomaten 105 verwendet werden kann. Das Messprinzip kann in der gleichen Weise wie das von Figur 6 angewandt werden. Das Messprinzip von Figur 7 kann einen Messfehler vermeiden, der auftreten kann, wenn im Messprinzip nach Figur 6 der Getränkebehälter 110 in einer gekippten Stellung entlang der Ablage 120 bewegt wird. Eine bestimmte Höhe des oberen Randes des Getränkebehälters 110 kann in diesem Fall je nach Kipprichtung kleiner oder größer als tatsächlich bestimmt werden. Figur 7A zeigt eine erste Ausführungsform und Figur 7B zeigt eine zweite Ausführungsform des gleichen Messprinzips.

In der Ausführungsform von Figur 7A befindet sich der Abstandssensor 130 über einem Bereich der Aufnahme 110, in dem sich der Getränkebehälter 110 befindet. Bevorzugt ist in diesem Bereich auch die Ausgabeöffnung 125 angebracht, sodass aus der Ausgabeöffnung 125 ausgegebene Flüssigkeit vom Getränkebehälter 110 aufgenommen werden kann. Der Abstandssensor 130 kann bewegt werden, um seine Messrichtung gegenüber der Vertikalen zu verändern. Dazu ist bevorzugt, dass der Abstandssensor 130 in einer insbesondere vertikalen Ebene geschwenkt werden kann. Diese Ebene verläuft weiter bevorzugt durch einen Bereich, in dem die Ausgabeöffnung 125 liegt. Ein Winkel zwischen der Messrichtung und der Vertikalen, welche die Richtung der Schwerkraft repräsentiert, kann variiert werden, wobei die Variation nur im positiven, nur im negativen oder sowohl im positiven als auch im negativen Winkelbereich liegen kann.

Durch Variation des Winkels kann die Messrichtung einen vorbestimmten Winkelbereich durchlaufen; dieses Durchlaufen kann für eine Höhenbestimmung einmal oder mehrmals durchgeführt werden. Für eine mehrmalige Bestimmung kann die Messrichtung oszillierend durch den Winkelbereich geführt werden. Dabei kann bestimmt werden, welchen Winkel die Messrichtung mit der Vertikalen einschließt, wenn ein minimaler Abstand zu einem Objekt bestimmt wurde. Mittels der oben angegebenen Beziehung kann eine Entfernungsmessung, die zu diesem Winkel korrespondiert, in eine Höhenmessung überführt werden.

Zur Vermeidung von Fehlmessungen kann nur dann eine bestimmte Höhe nur dann als gültig angesehen werden, wenn sie in einem vorbestimmten Bereich liegt. Dieser Bereich liegt innerhalb eines weiteren Bereichs, der zwischen der vertikalen Höhe des Abstandssensors 130 über der Ablage 120 und null definiert ist.

Figur 7B zeigt eine ähnliche Ausführungsform wie Figur 7A, wobei jedoch der Abstandssensor 130 an einer anderen Stelle angebracht ist. Licht, das zur Bestimmung eines Abstands ausgesandt und empfangen wird, kann mittels eines oder mehrerer optionaler Reflektionselemente 705, 710 so geleitet werden, dass es an einer entsprechenden Stelle wie in der Ausführungsform von Figur 7A austritt. In der vorliegenden Ausführungsform ist ein erstes optisches Element 705 vorgesehen, das einen Spiegel oder ein Prisma umfassen und einen zur Messung verwendeten Lichtstrahl des Abstandssensors 130 um einen vorbestimmten Winkel umlenken kann, der in der Darstellung von Figur 7 bei ca. 90° liegt. Durch Einsatz entsprechender optischer Elemente 705 kann der Abstandssensor 130 praktisch an einer beliebigen Stelle des Getränkeautomaten 105 angebracht werden. Ein Teil des Strahlengangs, der zwischen dieser Stelle und dem Abstandssensor 130 liegt, kann bei Abstandsbestimmungen kompensiert werden, sodass eine Höhenmessung bevorzugt nur den Abstand zwischen der vorbestimmten Stelle und einem abgetasteten Objekt, insbesondere dem Getränkebehälter 110, betrifft. Das Licht kann wie dargestellt an der vorbestimmten Stelle über der Ablage 120 nach unten ausgesandt werden. In einer anderen, nicht dargestellten Ausführungsform kann das Licht beispielsweise auch seitlich, von schräg oben oder schräg unten in Richtung der Ablage 120 im Bereich des Getränkebehälters 110 ausgesandt werden.

Ein optionales zweites optisches Element 710 ist als Polygonspiegel ausgebildet. Der Polygonspiegel 710 hat kann bevorzugt durch Drehung um verschiedene vorbestimmte Winkel um die Drehachse auf sich selbst abgebildet werden. Durch Drehen des Polygonspielgels 710 um eine insbesondere horizontale Drehachse kann ein Winkel, den die Messrichtung mit der Vertikalen einschließt, variiert werden. Dieser Winkel kann bezüglich eines Drehwinkels des Polygonspiegels 710 bestimmt werden und die Höhe kann mittels der oben angegebenen trigonometrischen Beziehung bezüglich der Messrichtung bestimmt werden, sodass die vertikale Höhe eines Objekts wie dem Getränkebehälter 110 letztlich auf der Basis des Drehwinkels bestimmt werden kann. Optional können eines oder mehrere weitere erste optische Elemente 705 im Strahlengang zwischen dem zweiten optischen Element 710 und dem Objekt liegen.

Bezugszeichen

| | |
|------|----------------------|
| 100  | System               |
| 105  | Getränkeautomat      |
| 110  | Getränkebehälter     |
| 115  | externe Stelle       |
| 120  | Aufnahme             |
| 125  | Ausgabeöffnung       |
| 130  | Abstandssensor       |
| 135  | Lichtquelle          |
| 140  | Lichtdetektor        |
| 145  | Steuervorrichtung    |

150 Verarbeitungseinrichtung
155 Speichervorrichtung
160 Einrichtung (Durchflussmesser, Pumpe)
165 Kommunikationseinrichtung
170 Ein- / Ausgabevorrichtung

200 Kalibrierungsverfahren
205 horizontales Einsetzen Tasse in Getränkeautomat
210 Abtasten Abstand zu Tassenrand
215 Abtasten Abstand Tassenboden
220 Bestimmen ungefähres Volumen
225 Auswahl Getränk
230 Füllen
235 Interaktion mit Benutzer
240 Abtasten Abstand zu Tasseninhalt
245 Abspeichern Tassenhöhe, Flüssigkeitsmenge, Getränkeart, Höhe Tassenboden, Füllstand Ende etc.

300 Steuerverfahren
305 horizontales Einsetzen Tasse in Getränkeautomat
310 Abtasten Abstand zu Tassenrand
315 Bestimmen Tasse, bereitstellen gespeicherte Informationen
320 Bestimmen ungefähres Volumen
325 Auswahl Getränk
330 Füllen
335 Interaktion mit Benutzer
340 Abtasten Abstand zu Tasseninhalt
345 Abstand korrekt?

405 Unterteller
410 erste vertikale Höhe: Abstand Abstandssensor - Aufnahme
415 zweite vertikale Höhe: Abstand Abstandssensor - Boden des Getränkebehälters
420 dritte vertikale Höhe: Abstand Abstandssensor - Inhalt des Getränkebehälters
425 vierte vertikale Höhe: Abstand Abstandssensor - oberer Rand des Getränkebehälters
430 fünfte vertikale Höhe: Abstand Abstandssensor - Inhalt, falls diese Höhe größer als die vierte Höhe ist
435 Flüssigkeit
440 Schaum

500 Datensatz
505 Flüssigkeitsmenge
510 Getränk
515 Variante, Zubereitungsart

605 erste Position
610 zweite Position
615 dritte Position
620 vierte Position

705 erstes optisches Element
710 zweites optisches Element

**Patentansprüche**

1. Kalibrierungsverfahren (200) für einen Getränkeautomaten (105), wobei das Verfahren folgende Schritte umfasst:

   - Abtasten (210) eines ersten vertikalen Abstands zwischen einem oberen Rand eines Getränkebehälters (110), der sich auf einer Aufnahme (120) des Getränkeautomats (105) befindet, und einem über der Aufnahme (120) angebrachten Abstandssensor (130);
   - Füllen (230) des Getränkebehälters (110) mit Flüssigkeit, bis ein zweiter vertikaler Abstand zwischen dem Abstandssensor (130) und einem Inhalt des Getränkebehälters (110) einen vorbestimmten Wert erreicht hat;
   - Bestimmen (245) einer Flüssigkeitsmenge (505), die während des Füllens durch den Getränkeautomaten (105) ausgegeben wurde; und
   - Abspeichern (245) des ersten vertikalen Abstands und der bestimmten Flüssigkeitsmenge (505) in einer Speichervorrichtung (155) des Getränkeautomaten (105), wobei vor dem Füllen (230) ein dritter vertikaler Abstand zwischen dem Abstandssensor (130) und dem Inhalt des Getränkebehälters (110) bestimmt wird, ein ungefähres Volumen des Getränkebehälters (110) auf der Basis des ersten und des dritten Abstands bestimmt (220) wird und das Füllen (230) in Abhängigkeit des bestimmten Volumens gesteuert wird.

2. Kalibrierungsverfahren (200) nach Anspruch 1, wobei ein Signal ausgegeben (235) wird, falls eine durch den Getränkeautomat (105) auszugebende Flüssigkeitsmenge (505) voraussichtlich das bestimmte Volumen übersteigt.

3. Kalibrierungsverfahren (200) nach einem der vorangehenden Ansprüche, wobei in Abhängigkeit der Art einer auszugebenden Flüssigkeit (510) der zweite Abstand kleiner als der erste Abstand sein kann.

4. Steuerverfahren (300) für einen Getränkeautomaten (105), wobei das Steuerverfahren (300) folgende Schritte umfasst:

   - Abtasten (310) eines ersten vertikalen Abstands zwischen einem oberen Rand eines Getränkebehälters (110), der sich auf einer Aufnahme (120) des Getränkeautomats (105) befindet, und einem über der Aufnahme (120) angebrachten Abstandssensor (130);

- Bestimmen (315) einer Flüssigkeitsmenge (505), die dem ersten vertikalen Abstand zugeordnet ist; und

- Füllen (330) des Getränkebehälters (110) mit einer Flüssigkeit der bestimmten Menge, wobei
- vor dem Füllen (330) ein dritter vertikaler Abstand zwischen dem Abstandssensor (130) und dem Inhalt des Getränkebehälters (110) bestimmt wird, ein ungefähres Volumen des Getränkebehälters (110) auf der Basis des ersten und des dritten Abstands bestimmt (320) wird und ein Signal ausgegeben (335) wird, falls eine Flüssigkeitsmenge (505), die einem gewählten Getränk zugeordnet ist, das bestimmte Volumen um mehr als ein vorbestimmtes Maß übersteigt.

5. Steuerverfahren (300) nach Anspruch 4, wobei das Füllen (330) abgebrochen wird, falls ein zweiter vertikaler Abstand zwischen dem Abstandssensor (130) und einem Inhalt des Getränkebehälters (110) einen vorbestimmten Wert erreicht.

6. Steuerverfahren (300) nach Anspruch 5, wobei in Abhängigkeit der Art einer auszugebenden Flüssigkeit der zweite Abstand kleiner als der erste Abstand ist.

7. Steuerverfahren (300) nach einem der Ansprüche 4 bis 6, wobei das Füllen (330) ermöglicht wird, wenn ein Abstand zwischen dem Abstandssensor (130) und dem Inhalt des Getränkebehälters (110) in einem vorbestimmten Bereich liegt.

8. Steuerverfahren (300) nach einem der Ansprüche 4 bis 7, wobei ein Signal ausgegeben (335) wird, falls der zweite Abstand nach dem Ausgeben der vorbestimmten Flüssigkeitsmenge (505) nicht zu einem vorbestimmten Abstand korrespondiert, der dem ersten Abstand zugeordnet ist.

9. Getränkeautomat (105), umfassend:

    - eine Aufnahme (120) für einen Flüssigkeitsbehälter;
    - einen über der Aufnahme (120) angebrachten Abstandssensor (130);
    - eine Ausgabevorrichtung (125), die zur Ausgabe von Flüssigkeit im Bereich der Aufnahme (120) eingerichtet ist;
    - eine Speichervorrichtung (155);
    - eine Verarbeitungseinrichtung (150), die dazu eingerichtet ist, ein Steuerverfahren (200) nach einem der Ansprüche 4 bis 9 durchzuführen.

10. Getränkeautomat (105), umfassend:

    - eine Aufnahme (120) für einen Flüssigkeitsbehälter;
    - einen über der Aufnahme (120) angebrachten Abstandssensor (130);
    - eine Ausgabevorrichtung (125), die zur Ausgabe von Flüssigkeit im Bereich der Aufnahme (120) eingerichtet ist;
    - eine Speichervorrichtung (155);
    - eine Vorrichtung (160) zur Bestimmung einer Menge ausgegebener Flüssigkeit;
    - eine Verarbeitungseinrichtung (150), die dazu eingerichtet ist, ein Kalibrierungsverfahren nach einem der Ansprüche 1 bis 3 durchzuführen.

11. Getränkeautomat (105) nach einem der Ansprüche 9 oder 10, wobei der Abstandssensor (130) auf der Basis von Licht arbeitet, das vom Abstandssensor (130) ausgesandt, an einem Objekt wenigstens teilweise reflektiert und vom Abstandssensor (130) erfasst wird.

12. Getränkeautomat (105) nach Anspruch 11, wobei der Abstandssensor (130) einen Laser zur Aussendung des Lichts umfasst.

13. Getränkeautomat (105) nach einem der Ansprüche 10 bis 12, wobei der Abstandssensor (130) dazu eingerichtet ist, den oberen Rand des Getränkebehälters (110) auf der Basis eines minimalen Abstands zum Getränkebehälter (110) zu bestimmen, während der Getränkebehälter horizontal an die Aufnahme (120) bewegt wird.

14. Getränkeautomat (105) nach einem der Ansprüche 10 bis 13, wobei der Abstandssensor (130) dazu eingerichtet ist, eine Messrichtung des Abstandssensors bezüglich der Vertikalen zu verändern und den oberen Rand des Getränkebehälters (110) auf der Basis einer Messrichtung zu bestimmen, bei der ein minimaler Abstand zum an der Aufnahme (120) still stehenden Getränkebehälter (110) besteht.

**Claims**

1. Calibration method (200) for a beverage dispenser (105), wherein the method comprises the following steps:

    - scanning (210) a first vertical distance between an upper edge of a beverage container (110), which is located on a support (120) of the beverage dispenser (105), and a distance sensor (130) attached above the support (120);
    - filling (230) the beverage dispenser (110) with liquid until a second vertical distance between the distance sensor (130) and a content of the beverage dispenser (110) has reached a predetermined value;

- determining (245) a quantity of liquid (505), which was dispensed while the beverage dispenser (105) was being filled; and
- saving (245) the first vertical distance and the determined liquid quantity (505) in a storage device (155) of the beverage dispenser (105), wherein prior to the filling process (230) a third vertical distance is determined between the distance sensor (130) and the content of the beverage dispenser (110), an approximate volume of the beverage dispenser (110) is determined (220) on the basis of the first and the third distance and the filling process (230) is controlled as a function of the determined volume.

2. Calibration method (200) according to claim 1, wherein a signal is output (235) if a quantity of liquid (505) to be dispensed by the beverage dispenser (105) is expected to exceed the determined volume.

3. Calibration method (200) according to one of the preceding claims, wherein as a function of the type of liquid (510) to be dispensed, the second distance can be smaller than the first distance.

4. Control method (300) for a beverage dispenser (105), wherein the control method (300) comprises the following steps:

- scanning (310) a first vertical distance between an upper edge of a beverage container (110), which is located on a support (120) of the beverage dispenser (105), and a distance sensor (130) attached above the support (120);
- determining (315) a quantity of liquid (505) which is assigned to the first vertical distance; and
- filling (330) the beverage container (110) with a liquid of the determined quantity, wherein
- prior to the filling process (330), a third vertical distance between the distance sensor (130) and the content of the beverage container (110) is determined, an approximate volume of the beverage container (110) is determined (320) on the basis of the first and the third distance and a signal is output (335) if a quantity of liquid (505) which is assigned to a selected beverage exceeds the determined volume by more than a predetermined degree.

5. Control method (300) according to claim 4, wherein the filling process (330) is interrupted if a second vertical distance between the distance sensor (130) and a content of the beverage container (110) reaches a predetermined value.

6. Control method (300) according to claim 5, wherein as a function of the type of liquid to be dispensed, the second distance is smaller than the first distance.

7. Control method (300) according to one of claims 4 to 6, wherein the filling process (330) is enabled if a distance between the distance sensor (130) and the content of the beverage container (110) lies in a predetermined range.

8. Control method (300) according to one of claims 4 to 7, wherein a signal is output (335) if after dispensing the predetermined quantity of liquid (505) the second distance does not correspond to a predetermined distance which is assigned to the first distance.

9. Beverage dispenser (105), comprising:

- a support (120) for a liquid container;
- a distance sensor (130) attached above the support (120);
- a dispensing apparatus (125) which is designed to dispense liquid in the region of the support (120);
- a storage device (155);
- a processing device (150) which is designed to carry out a control method (200) according to one of claims 4 to 9.

10. Beverage dispenser (105) comprising:

- a support (120) for a liquid container;
- a distance sensor (130) attached above the support (120);
- a dispensing apparatus (125) which is designed to dispense liquid in the region of the support (120);
- a storage apparatus (155);
- an apparatus (160) for determining a quantity of dispensed liquid;
- a processing device (150) which is designed to carry out a calibration method according to one of claims 1 to 3.

11. Beverage dispenser (105) according to one of claims 9 or 10, wherein the distance sensor (130) operates on the basis of light, which is emitted by the distance sensor (130), at least partially reflected onto an object and detected by the distance sensor (130).

12. Beverage dispenser (105) according to claim 11, wherein the distance sensor (130) comprises a laser for emitting the light.

13. Beverage dispenser (105) according to one of claims 10 to 12, wherein the distance sensor (130) is designed to determine the upper edge of the beverage container (110) on the basis of a minimal distance from the beverage container (110) while the beverage container is moved horizontally onto the support (120).

14. Beverage dispenser (105) according to one of claims 10 to 13, wherein the distance sensor (130) is designed to change a measuring direction of the distance sensor with respect to the vertical and to determine the upper edge of the beverage container (110) on the basis of a measuring direction, in which a minimal distance exists with respect to the beverage container (110) which is stationary on the support (120).

**Revendications**

1. Procédé d'étalonnage (200) pour un automate à boissons (105), dans lequel le procédé comprend les étapes suivantes :

   - balayage (210) d'une première distance verticale entre un bord supérieur d'un contenant à boissons (110) qui se trouve sur un logement (120) de l'automate à boissons (105) et un capteur de distance (130) disposé au-dessus du logement (120) ;
   - remplissage (230) du contenant à boissons (110) en fluide jusqu'à ce qu'une deuxième distance verticale entre le capteur de distance (130) et un contenu du contenant à boissons (110) ait atteint une valeur prédéterminée ;
   - détermination (245) d'une quantité de fluide (505) émise par l'automate à boissons (105) durant le remplissage ; et
   - enregistrement (245) de la première distance verticale et de la quantité de fluide déterminée (505) dans un dispositif de mémorisation (155) de l'automate à boissons (105), dans lequel une troisième distance verticale entre le capteur de distance (130) et le contenu du contenant à boissons (110) est déterminée avant le remplissage (230), un volume approximatif du contenant à boissons (110) est déterminé sur la base de la première et de la troisième distance (220) et le remplissage (230) est commandé en fonction du volume déterminé.

2. Procédé d'étalonnage (200) selon la revendication 1, dans lequel un signal (235) est émis dans l'hypothèse où une quantité de fluide (505) à émettre par l'automate à boissons (105) excède probablement le volume déterminé.

3. Procédé d'étalonnage (200) selon l'une des revendications précédentes, dans lequel la deuxième distance peut être inférieure à la première distance en fonction du type d'un fluide à émettre (510).

4. Procédé de commande (300) pour un automate à boissons (105), dans lequel le procédé de commande (300) comprend les étapes suivantes :

   - balayage (310) d'une première distance verticale entre un bord supérieur d'un contenant à boissons (110) qui se trouve sur un logement (120) de l'automate à boissons (105) et un capteur de distance (130) disposé au-dessus du logement (120) ;
   - détermination (315) d'une quantité de fluide (505) affectée à la première distance verticale ; et
   - remplissage (330) du contenant à boissons (110) avec un fluide de quantité déterminée, dans lequel
   - une troisième distance verticale entre le capteur de distance (130) et le contenu du contenant à boissons (110) est déterminée avant le remplissage (330), un volume approximatif du contenant à boissons (110) est déterminé sur la base de la première et de la troisième distance (320) et un signal (335) est émis dans l'hypothèse où une quantité de fluide (505) affectée à une boisson sélectionnée excède le volume déterminé de plus d'une mesure prédéterminée.

5. Procédé de commande (300) selon la revendication 4, dans lequel le remplissage (330) est interrompu dans l'hypothèse où une deuxième distance verticale entre le capteur de distance (130) et un contenu du contenant à boissons (110) atteint une valeur prédéterminée.

6. Procédé de commande (300) selon la revendication 5, dans lequel la deuxième distance est inférieure à la première distance en fonction du type d'un fluide à émettre.

7. Procédé de commande (300) selon l'une des revendications 4 à 6, dans lequel le remplissage (330) est rendu possible lorsqu'une distance entre le capteur de distance (130) et le contenu d'un contenant à boissons (110) se trouve dans une plage prédéterminée.

8. Procédé de commande (300) selon l'une des revendications 4 à 7, dans lequel un signal (335) est émis dans l'hypothèse où la deuxième distance ne correspond pas, après l'émission d'une quantité de fluide prédéterminée (505), à une distance prédéterminée affectée à la première distance.

9. Automate à boissons (105), comprenant :

   - un logement (120) pour un contenant à boissons ;
   - un capteur de distance (130) disposé au-dessus du logement (120) ;
- un dispositif distributeur (125) aménagé pour l'émission de fluide dans la zone du logement (120) ;
- un dispositif de mémorisation (155) ;
- un dispositif de traitement (150) aménagé afin d'exécuter un procédé de commande (200) selon l'une des revendications 4 à 9.

10. Automate à boissons (105), comprenant :

   - un logement (120) pour un contenant à boissons ;
   - un capteur de distance (130) disposé au-dessus du logement (120) ;
   - un dispositif distributeur (125) aménagé pour l'émission de fluide dans la zone du logement (120) ;
   - un dispositif de mémorisation (155) ;
   - un dispositif (160) de détermination d'une quantité de fluide émise ;
   - un dispositif de traitement (150) aménagé afin d'exécuter un procédé d'étalonnage selon l'une des revendications 1 à 3.

11. Automate à boissons (105) selon l'une des revendications 9 ou 10, dans lequel le capteur de distance (130) travaille sur base d'une lumière émise par le capteur de distance (130), au moins en partie réfléchie sur un objet et que le capteur de distance (130) perçoit.

12. Automate à boissons (105) selon la revendication 11, dans lequel le capteur de distance (130) comprend un laser pour l'émission de la lumière.

13. Automate à boissons (105) selon l'une des revendications 10 à 12, dans lequel le capteur de distance (130) est aménagé afin de déterminer le bord supérieur d'un contenant à boissons (110) sur la base d'une distance minimale par rapport au contenant à boissons (110), pendant le placement horizontal du contenant à boissons sur le logement (120).

14. Automate à boissons (105) selon l'une des revendications 10 à 13, dans lequel le capteur de distance (130) est aménagé afin de modifier une direction de mesure du capteur de distance par rapport à la verticale et de déterminer le bord supérieur du contenant à boissons (110) sur la base d'une direction de mesure, dans laquelle une distance minimale par rapport au contenant à boissons (110) immobile sur le logement (120) existe.

**Fig. 1**

200

205

210

215

220

225

230

235

240

245

**Fig. 2**

300

305

310

315

320

325

330

335

340

345

**Fig. 3**

**Fig. 4**

**Fig. 5**

**Fig. 6**

**Fig. 7A**

**Fig. 7B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1999050172 A1
- EP 1647951 A1